(19) **Europäisches Patentamt / European Patent Office / Office européen des brevets**

(11) **EP 2 807 890 B1**

(12) **EUROPEAN PATENT SPECIFICATION**

(45) Date of publication and mention
of the grant of the patent:
**12.04.2017 Bulletin 2017/15**

(21) Application number: **13741631.9**

(22) Date of filing: **16.01.2013**

(51) Int Cl.:
**H04W 72/08** (2009.01)

(86) International application number:
**PCT/US2013/021728**

(87) International publication number:
**WO 2013/112334 (01.08.2013 Gazette 2013/31)**

(54) **TECHNIQUES FOR UPLINK COVERAGE ANALYSIS**

VERFAHREN ZUR ANALYSE VON UPLINK-DECKUNGSBEREICHEN

PROCÉDÉS D'ANALYSE DE COUVERTURE SUR LA LIAISON MONTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2012 US 201261589774 P**
**27.06.2012 US 201213534463**

(43) Date of publication of application:
**03.12.2014 Bulletin 2014/49**

(73) Proprietor: **Intel Corporation
Santa Clara, CA 95054 (US)**

(72) Inventors:
• **YANG, Rongzhen
Shangai 200240 (CN)**

• **YIN, Hujun
Saratoga, California 95070 (US)**
• **FWU, Jong-Kae
Sunnyvale, California 94087 (US)**

(74) Representative: **Goddar, Heinz J.
Boehmert & Boehmert
Anwaltspartnerschaft mbB
Patentanwälte Rechtsanwälte
Pettenkoferstrasse 20-22
80336 München (DE)**

(56) References cited:
**EP-A2- 2 360 960     KR-A- 20100 088 085
KR-A- 20110 050 311     KR-A- 20110 136 757
US-A1- 2009 082 053     US-A1- 2009 082 053
US-A1- 2010 330 921     US-B1- 6 496 493**

EP 2 807 890 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## BACKGROUND

User equipment (UE) or wireless devices may couple to a wireless network via communication links with base stations of the wireless network. Typically, during setup and/or layout of a wireless network, measurements may be taken at various geographic locations to identify areas of weak signal coverage for UEs that may couple to the wireless network. In years past, signal measurements may have been meticulously taken by mobile measuring units (e.g., drive tests) at various locations serviced by the wireless networks. Operating parameters for equipment and UEs coupling to the wireless network may then have been established based on these measurements.

Recently, UEs with at least some ability to measure some signal characteristics are being deployed in newer generations of wireless networks. These newer generations of wireless networks are using the enhanced measurement abilities of UEs for taking some measurements. These types of UEs may provide at least some signal quality or interference information to a wireless network to assist the wireless network in dynamically identifying areas of weak or reduced signal coverage.

## BRIEF DESCRIPTION OF THE DRAWINGS

| FIG. 1 | illustrates an example wireless network. |
| FIG. 2 | illustrates an example configuration message format. |
| FIG. 3 | illustrates an example information request format. |
| FIG. 4 | illustrates an example process. |
| FIG. 5 | illustrates an example of a first information element format. |
| FIG. 6 | illustrates an example of a second information element format. |
| FIG. 7 | illustrates an example of a third information element format. |
| FIG. 8 | illustrates an example block diagram for a first apparatus. |
| FIG. 9 | illustrates an example of a first logic flow. |
| FIG. 10 | illustrates an example of a second logic flow. |
| FIG. 11 | illustrates an example of a first storage medium. |
| FIG. 12 | illustrates an example block diagram for a second apparatus. |
| FIG. 13 | illustrates an example of a third logic flow. |
| FIG. 14 | illustrates an example of a fourth logic flow. |
| FIG. 15 | illustrates an example of a second storage medium. |
| FIG. 16 | illustrates an example of a communications architecture. |
| FIG. 17 | illustrates an example of a communications system. |

## DETAILED DESCRIPTION

Examples are generally directed to improvements for wireless mobile broadband technologies. Wireless mobile broadband technologies may include any wireless technologies suitable for use with wireless devices or user equipment (UE), such as one or more third generation (3G) or fourth generation (4G) wireless standards, revisions, progeny and variants. Examples of wireless mobile broadband technologies may include without limitation any of the Institute of Electrical and Electronics Engineers (IEEE) 802.16m and 802.16p standards, 3rd Generation Partnership Project (3GPP) Long Term Evolution (LTE) and LTE-Advanced (LTE-A) standards, and International Mobile Telecommunications Advanced (IMT-ADV) standards, including their revisions, progeny and variants. Other suitable examples may include without limitation Global System for Mobile Communications (GSM)/Enhanced Data Rates for GSM Evolution (EDGE) technologies, Universal Mobile Telecommunications System (UMTS)/High Speed Packet Access (HSPA) technologies, Worldwide Interoperability for Microwave Access (WiMAX) or the WiMAX II technologies, Code Division Multiple Access (CDMA) 2000 system technologies (e.g., CDMA2000 1xRTT, CDMA2000 EV-DO, CDMA EV-DV, and so forth), High Performance Radio Metropolitan Area Network (HIPERMAN) technologies as defined by the European Telecommunications Standards Institute (ETSI) Broadband Radio Access Networks (BRAN), Wireless Broadband (WiBro) technologies, GSM with General Packet Radio Service (GPRS) system (GSM/GPRS) technologies, High Speed Downlink Packet Access (HSDPA) technologies, High Speed Orthogonal Frequency-Division Multiplexing (OFDM) Packet Access (HSOPA) technologies, HighSpeed Uplink Packet Access (HSUPA) system technologies, 3GPP Rel. 8, 9, 10 or above of LTE/System Architecture Evolution (SAE), and so forth. The examples are not limited in this context.

By way of example and not limitation, various examples may be described with specific reference to various 3GPP LTE and LTE-A standards, such as the 3GPP LTE Evolved UMTS Terrestrial Radio Access Network (E-UTRAN), Universal Terrestrial Radio Access (E-UTRA) and LT-A Radio Technology 36 Series of Technical Specifications (collectively "3GPP LTE specifications"), and IEEE 802.16 standards, such as the IEEE 802.16-2009 standard and current third revision to IEEE 802.16 referred to as "802.16Rev3" consolidating standards 802.16-2009, 802.16h-2010 and 802.16m-2011, and the IEEE 802.16p draft standards including IEEE P802.16.1b/D2 January 2012 titled "Draft Amendment to IEEE Standard for WirelessMAN-Advanced Air Interface for Broadband Wireless Access Systems, Enhancements to Support Machine-to-Machine Applications" (collectively "IEEE 802.16 standards"), and any drafts, revisions or variants of the 3GPP LTE specifications and the IEEE 802.16 standards. Although some embodiments may be described as a 3GPP LTE specifications or IEEE 802.16 standards system by way of example and not limitation, it may be appreciated that other types of communications system may be implemented as various other types of mobile broadband communications systems and standards. The examples are not limited in this context . Relevant prior art is represented by document KR20110050311.

As contemplated in the present disclosure, UEs may provide at least some signal quality or interference information to a wireless network to assist the wireless network in dynamically identifying areas of weak or reduced signal coverage. In some examples, as a result of providing at least some signal quality or interference information, time and labor intensive drive tests to measure uplink signal quality may be minimized. Hence, in some examples, use of UEs to determine areas of weak signal coverage may be called Minimization of Drive Tests (MDT).

According to some examples, UEs may provide MDT information such as a power headroom report (PHR). For these examples, a PHR provided by a UE may enable a wireless network to identify coverage areas having weak or unacceptable uplink signal coverage provided via one or more base stations that may couple to the measuring UE or other UEs located near the measuring UE. Although MDT information that includes a PHR may identify the weak coverage area, the PHR may not provide enough information to analyze possible causes such as poor uplink signal quality (e.g., high pathloss) or high levels of uplink signal interference. As a result of the PHR not providing enough information, labor intensive drive tests may still need to occur to determine what may be the cause of weak coverage.

In some examples, techniques may be implemented for uplink coverage analysis. For these examples, an information request may be transmitted from a base station to a wireless device coupled to the wireless network through the base station. The information request to include a request to receive logged uplink signal quality or interference information. The requested uplink signal quality or interference information may then be received from the wireless device. According to some examples, uplink interference or pathloss associated with uplink coverage provided by one or more base stations for the wireless network may be analyzed based, at least in part, on the logged uplink signal quality or interference information received from the wireless device.

Techniques may also be implemented for uplink coverage analysis that includes a wireless device receiving a configuration message. According to some examples, the wireless device may be configured based on the configuration message directing measurement of uplink signal quality or interference characteristics for one or more communication links between the wireless device and one or more base stations of the wireless network. The wireless device may also be configured based on the configuration message directing the wireless device to log uplink signal quality or interference information associated with the measured uplink signal quality or interference characteristics. Responsive to receiving an information request from the base station, logged uplink signal quality or interference information may be sent to a base station of the wireless network. For these examples, the logged uplink signal quality or interference information may be used by the base station or the wireless network to analyze uplink interference or pathloss associated with uplink coverage provided by the base station(s) for the wireless network to the wireless device.

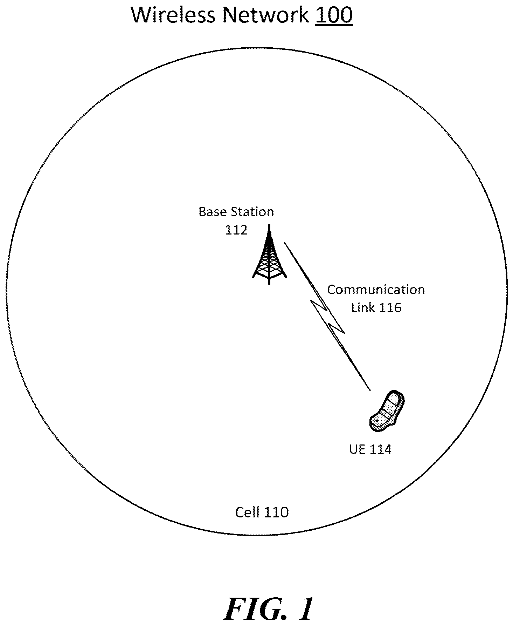

**FIG. 1** illustrates an example wireless network 100. In some examples, as shown in FIG. 1, wireless network 100 may include at least a cell 110. Also as shown in FIG. 1, cell 110 includes a base station 112 communicatively coupled to a wire device or user equipment (UE) 114 via communication link 116. For these examples, UE 114 may be arranged to communicatively couple to wireless network 100 via base station 112 while UE 114 may be physically or geographically located in cell 110. This disclosure is not limited to a wireless network having a single cell, base station or UE and this disclosure contemplates wireless networks having any number of cells separately serviced by any number of base stations that communicatively couple to any number of UEs

According to some examples, control elements of wireless network 100 (e.g., a mobility management entity - not shown) may be arranged to gather at least some uplink signal quality or interference information from a wireless device such as UE 114 that couples to wireless network 100 via a base station such as base station 112. For these examples, UE 114 may be configured or arranged to measure uplink signal quality or interference characteristics associated with communication link 116. UE 114 may also be configured or arranged to log uplink signal quality or interference information associated with measured uplink signal quality or interference information. As described more below, UE 114 may provide the logged uplink signal quality or interference information responsive to a request from a base station such as base station 112.

According to some examples, UE 114 may be any electronic device having wireless capabilities or equipment. For some examples, UE 114 may be implemented in a fixed device. For some examples, UE 114 may be implemented as a mobile device. A fixed device generally refers to an electronic device designed to be in a fixed, stationary, permanent or otherwise non-moving position or location that does not vary over time. By way of contrast, a mobile device is designed to be portable enough to be frequently moved between various locations over time. It may be appreciated that although a fixed device is generally stationary, some fixed devices may be disconnected from their current equipment in a first fixed location, moved to a second fixed location, and connected to equipment at the second fixed location.

According to some examples, the logic and/or features at base station 112 may include system equipment, such as network equipment for a communications system or network compliant with one or more 3GPP LTE specifications or standards (e.g., LTE-A). For example, these base stations may be implemented as evolved Node B (eNB) base stations for a Wireless LTE or LTE-A network. Although some examples are described with reference to a base station or an eNB, embodiments may utilize any network equipment for a wireless network. The examples are not limited in this context.

In some examples, communication link 116 may be operated in accordance with one or more applicable wireless communication or networking standards in any version. One such communication or networking standard may include 3GPP LTE-A.

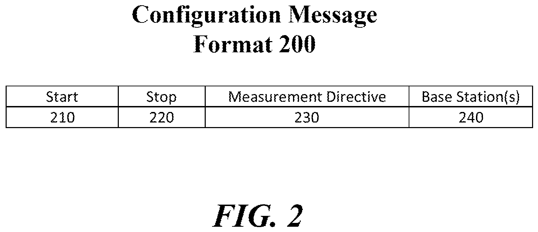

FIG. 2 illustrates an example configuration message format 200. As shown in FIG. 2, configuration message format 200 includes fields 210 to 240. A base station for a wireless network may transmit a configuration message in the example format of configuration message format 200 to a wireless device. For example, base station 112 may transmit a configuration message to UE 114 that is formatted according to configuration message format 200. Fields 210 and 220 may indicate start and stop times for UE 114 to measure uplink signal quality or interference characteristics. Field 330 may indicate whether to measure uplink signal quality or interference characteristics, interference characteristics or both characteristics. Field 340 may indicate one or more base stations via which UE 114 is to log measured uplink signal quality or interference characteristics. For example, field 340 may indicate logging measured uplink signal quality or interference characteristics associated with a given base station such as base station 112. Additionally or alternatively, field 340 may indicate logging measured uplink signal quality or interference characteristics associated with other base stations.

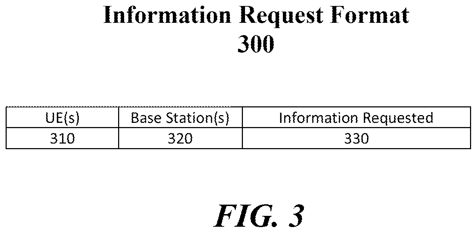

FIG. 3 illustrates an example information request format 300. As shown in FIG. 3, information request format 300 includes fields 310 to 330. A base station for a wireless network may transmit an information request in the example format of information request format 300. For example, base station 112 may transmit an information request to UE 114 that is formatted according to information request format 300. Field 310 may indicate one or more UEs for which the information requested is targeted. The one or more UE may include UE 114. Field 320 may indicate one or more base stations via which the targeted UE(s) may provide logged uplink signal quality or interference information. Field 330 may indicate particular signal quality or interference information requested.

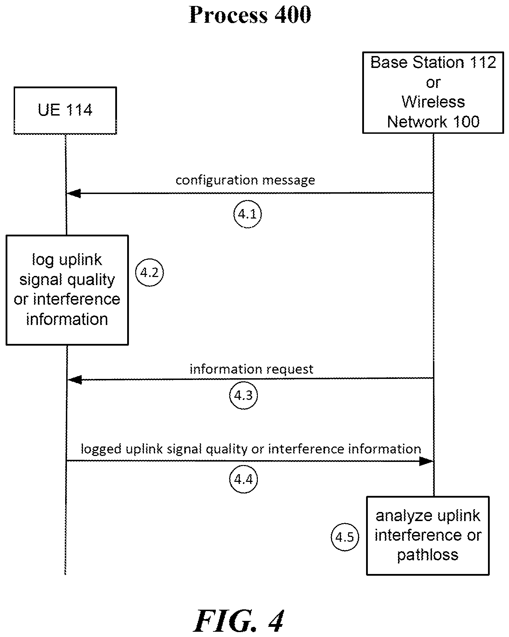

FIG. 4 illustrates an example process 400. In some examples, process 400 may illustrate interactions between UE 114 and base station 112 or wireless network 100 to enable analysis of uplink coverage provided by one or more base stations of wireless network 100. For these examples, elements of wireless network 100 as shown in FIG. 1 may be used to illustrate example operations related to process 400. Also, for these examples, example formats such as configuration message format 200 or information request format 300 as shown in FIGS. 2 and 3 may be used to illustrate the example operations related to process 400. The described example operations are not limited to implementations on wireless network 100 as shown in FIG. 1 or to the example formats shown in FIGS. 2 or 3.

Beginning at process 4.1 (configuration message), logic and/or features at base station 112 or at wireless network 100 may cause a configuration message in the format of configuration message format 200 to be transmitted to UE 114. For these examples, the configuration message may include information to direct UE 114 to measure uplink signal quality or interference characteristics associated with communication link 116. The configuration message may also include information to direct UE 114 to log uplink signal quality or interference information associated with the measured characteristics.

According to some examples, UE 114 and base station 112 may be arranged to operate in compliance with one or more 3GPP LTE standards or specifications to include standards associated with LTE-A. For these examples, rather than receiving the configuration message in the format of configuration message format 200, the configuration message may received by UE 114 from base station 112 in an LTE-A compliant Information Element (IE). For example, a LoggedMeasurementConfiguration IE as described in the one or more 3 GPP LTE standards to include LTE-A may convey the configuration message to UE 114.

Proceeding to process 4.2 (log uplink signal quality or interference information), logic and/or features of UE 114 may log uplink signal quality or interference information. In some examples, the logged information may include one or more uplink base power levels associated with uplink interference observed by base station 112 (e.g., determined via feedback received from base station 112). The logged information may also include an indication of pathloss for communication link 116 based on uplink signal quality characteristic measurements by UE 114. According to some examples, UE 114 may be arranged to log the uplink signal quality or interference information associated with the measured characteristics in a memory maintained at or with UE 114.

Proceeding to process 4.3 (information request), logic and/or features at base station 112 may be arranged to request the logged uplink signal quality or interference information from UE 114. In some examples, the request may be in an information request in the format of information request format 300. For these examples, the information request may indicate to UE 114 what logged information associated with what base station(s) is being requested. For example, the information request may request logged information for base station 112 associated with uplink signal quality or interference characteristics or associated with uplink interference characteristics.

Proceeding to process 4.4 (logged uplink signal quality or interference information), logic and/or features at UE 114 may be arranged to provide the logged uplink signal quality or interference information responsive to the information request from base station 112. As described more below, various formats may be utilized to provide the logged uplink signal quality or interference information to a base station such as base station 112. In some examples, base station 112 and UE 114 may be arranged to operate in compliance with one or more 3GPP LTE standards to include LTE-A. For these examples, one or more information elements (IEs) may be formatted to include the logged uplink signal quality or interference information. These IEs may be transmitted from UE 114 to base station 112 in order to provide the logged uplink signal quality or interference information.

Proceeding to process 4.5 (analyze uplink interference or pathloss), logic and/or features at base station 112 or at wireless network 100 may be arranged to analyze uplink interference or pathloss associated with uplink coverage provided by base station 112. In some examples, the analysis of uplink interference or pathloss may be based, at least in part, on the logged uplink signal quality or interference information received from UE 114. For these examples, the logic and/or features at wireless network 100 and/or base station 112 may then determine whether uplink interference or pathloss may be a cause or contributor to possibly reduced or weak uplink coverage for base station 112 receiving UE 114's uplink signals via communication link 116. According to some examples, based on the determination, corrective actions may be taken to improve the uplink coverage for base station 112.

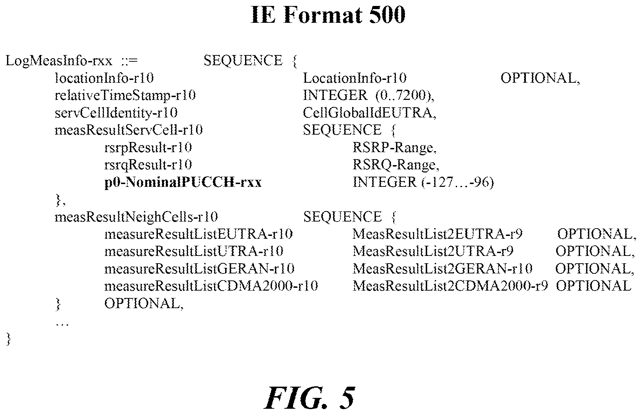

**FIG. 5** illustrates an example information element (IE) format 500. In some examples, IE format 500 as shown in FIG. 5 may be utilized by a wireless network operated in compliance with one or more 3GPP LTE standards to include LTE-A. For these examples, IE format 500 may be associated with conveying MDT information from a wireless device to a base station and/or a wireless network. Also for these examples, various suffixes in IE format 500 include "r9" "r10" or "rxx" to indicate the various releases of the LTE-A standard that may describe descriptors in an IE that conveys MDT information between elements of a wireless network (e.g., UE 114 or base station 112). For example, "locationInfo-r10" may be described in release 10 of the LTE-A standard. Base stations (e.g., eNBs) or wireless devices (e.g., UEs) arranged to operate in compliance with release 10 would be able to identify the meaning of the information associated with locationInfo-r10 for MDT information conveyed in the format of IE format 500.

According to some examples, "rxx" may indicate future releases of the LTE-A standard above release 10 (e.g., release 11). For these examples, as shown in FIG. 5, LogMeasInfo-rxx in the upper left corner of IE format 500 may indicate a type of IE to convey MDT information that includes additional or different descriptors than IEs described in releases 9 or 10. Also, p0-NominalPUCCH-rxx may indicate that this descriptor is what makes IE format 500 a different type of IE than IE's describe in releases 9 or 10.

In some examples, p0-NominalPUCCH-rxx may indicate uplink interference information measured and/or determined by an UE. For these examples, PUCCH indicates Physical Uplink Control Channel. The UE may be arranged to operate in compliance with the LTE-A standard and may determine its uplink power control for control channel by compensating for pathloss and a fixed coding rate. An uplink base power level (p0) setting for PUCCH ($P_{0\_PUCCH}$) may need to directly reflect possible uplink interference observed by an eNB that couples the UE to a wireless network. Otherwise, a communication link between the UE and the eNB that is of acceptable quality may not be possible. Example equation (1) shows the relationship of $P_{0\_PUCCH}$ in determining the UE's uplink power control for control channel ($P_{PUCCH}$) when operating in compliance with the LTE-A standard.

$$(1) \quad P_{\text{PUCCH}}(i) = \min\{P_{\text{CMAX},c}, P_{0\_\text{PUCCH}} + PL_c + h(n_{CQI}, n_{HARQ}, n_{SR}) + \Delta_{\text{F\_PUCCH}}(F) + \Delta_{TxD} + g(i)\}$$

For example equation (1), the UE's $P_{PUCCH}$ for subframe *i* for a cell c may be determined by logic and/or features at the UE. $P_{0\_PUCCH}$ of example equation (1) includes two parts, $P_{0\_NOMINAL\_PUCCH}$ and $P_{0\_UE\_PUCCH}$. The $P_{0\_NOMINAL\_PUCCH}$ may be used to support the overall system uplink base power level of the UE and should reflect uplink interference observed by the eNB. The $P_{0\_UE\_PUCCH}$ may be used to reflect an UE-specific power offset value initialed as 0.

According to some examples, the UE may at least temporarily maintain a value associated with $P_{0\_NOMINAL\_PUCCH}$ in a memory or cache located with or at the UE. For these examples, the value associated with $P_{0\_NOMINAL\_PUCCH}$ may be indicated by p0-NominalPUCCH-rxx for an IE conveying MDT information to the eNB in an IE that may be in the format or example IE format 500. The eNB may then use the value associated with $P_{0\_NOMINAL\_PUCCH}$

indicated by p0-NominalPUCCH-rxx to determine an estimated Interference over Thermal noise (IoT) value. Example equation (2) may be used by logic and/or features at or with the eNB to determine the IoT value.

$$(2) \quad IoT_{\text{Estimated}} = P_{0\_NOMINAL\_PUCCH} - SINR_{PUCCH\_Format\_1a} - P_N$$

Where:

$SINR_{PUCCH\_Format\_1a}$ is the required Signal to Interference plus Noise Ratio (SINR) threshold for PUCCH Format 1a according to the LTE-A standard.
$SINR_{PUCCH\_Format\_1a}$ may be known by a particular base station manufacturer/type (which can be found by the servCellIdentity-r10).
$P_N$ is the white noise power (included in the base station receiver noise figure) and is known by the particular base station manufacturer/type.

In some examples, the eNB may utilize the determined value for $IoT_{\text{Estimated}}$ to adjust operating parameters. High levels or values for $IoT_{\text{Estimated}}$ may indicate that uplink signal interference may be a significant cause of reduced or weak uplink coverage for the eNB. Based on this indication of high amounts of uplink signal interference, the eNB may adjust operating parameters to mitigate weak or reduced uplink coverage for the eNB in the general vicinity of the UE.

In some alternative examples, the eNB may forward the value associated with $P_{0\_NOMINAL\_PUCCH}$ indicated by p0-NominalPUCCH-rxx to a control element for the wireless network (e.g., to a mobility management entity). Logic and/or features at the control element may then determine $IoT_{\text{Estimated}}$ using example equation (2) and then direct the eNB to adjust operating parameters. The eNB may be directed to adjust the parameters, for example, if the determined $IoT_{\text{Estimated}}$ indicates interference may be a significant cause of weak or reduced uplink coverage for the eNB. Adjusting the operating parameters of the eNB may mitigate weak or reduced uplink coverage for the eNB in the general vicinity of the UE.

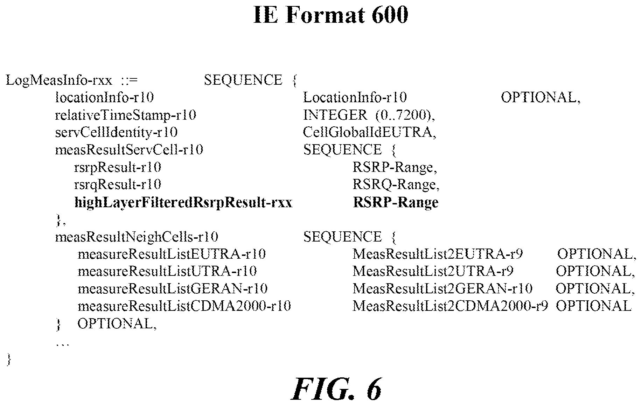

**FIG. 6** illustrates an example information element (IE) format 600. In some examples, similar to IE format 500, IE format 600 as shown in FIG. 6 may be utilized by a wireless network operated in compliance with one or more 3GPP LTE standards to include LTE-A. For these examples, IE format 600 may also be associated with conveying MDT information from a UE to an eNB and/or a wireless network.

According to some examples, IE format 600 includes a highLayerFilteredRsrpResult-rxx descriptor. For these examples, this descriptor may be associated with information indicating uplink signal quality for a communication link between an UE and an eNB. One type of uplink signal quality may be associated with one or more values for Reference Signal Received Power (RSRP) as observed by the UE for signals received from the eNB. The one or more values for RSRP may then be higher layered filtered by the UE (e.g., layer 3 filtering) and that higher layered filtered value for RSRP may be conveyed to an eNB or control element of a wireless network in an IE that is in the format of example IE format 600.

In some examples, the eNB or control element of the wireless network (e.g., a mobility management entity) may include logic and/or features to estimate pathloss for a cell ($PL_c$) serviced by the eNB based on the information indicated by highLayerFilteredRsrpResult-rxx for an IE conveying MDT information in the format of example IE format 600. For these examples, the logic and/or features may utilize example equation (3) to estimate $PL_c$.

$$(3) \quad PL_c = \text{r}\textit{eferenceSignalPower} - \text{higher layer filtered RSRP}$$

Where:

*referenceSignalPower* may be known for each eNB included in the wireless network.

In some examples, the eNB may utilize the determined value for $PL_c$ to adjust operating parameters. High levels or values for the estimated $PL_c$ may indicate that pathloss (e.g., low uplink signal quality) may be a significant cause of reduced or weak uplink coverage for the eNB. Based on this indication of high amounts of pathloss, the eNB may adjust operating parameters to mitigate reduced or weak uplink coverage for the eNB in the general vicinity of the UE.

In some alternative examples, the eNB may forward the value associated with the higher layer filtered value for RSRP indicated by highLayerFilteredRsrpResult-rxx to a control element for the wireless network (e.g., to a mobility management entity). Logic and/or features at the control element may then determine $PL_c$ utilizing example equation (3) and then direct the eNB to adjust operating parameters. The eNB may be directed to adjust the parameters, for example, if the determined $PL_c$ indicates pathloss may be a significant cause of reduced or weak uplink coverage for the eNB. Adjusting the operating parameters of the eNB may mitigate reduced or weak uplink coverage for the eNB in the general vicinity of the UE.

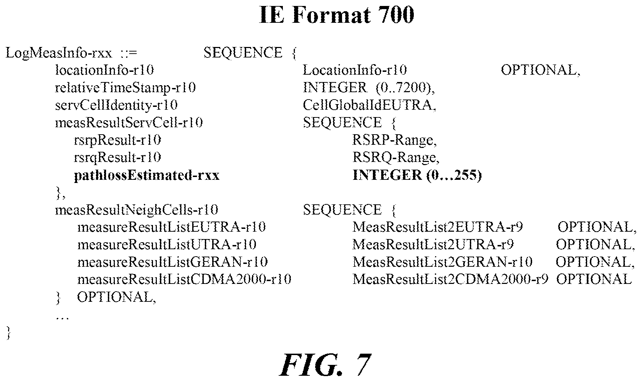

**FIG. 7** illustrates an example information element (IE) format 700. In some examples, similar to IE formats 500 or 600, IE format 700 as shown in FIG. 7 may be utilized by a wireless network operated in compliance with one or more 3GPP LTE standards to include LTE-A. For these examples, IE format 700 may also be associated with conveying MDT information from a UE to an eNB and/or a wireless network.

According to some examples, IE format 7 00 includes a pathlossEstimated-rxx descriptor. The pathlossEstimated-rxx descriptor may indicate uplink signal quality for a communication link between an UE and an eNB. For these examples, rather than sending a higher layered filtered value for RSRP to the eNB or a wireless network control element, the UE may include logic and/or features to determine an estimated $PL_c$. The logic and/or features of UE may utilize example equation (3) to determine the estimated $PL_c$. An IE that is in the format of example IE format 600 may then convey MDT information that indicates the estimated PLc via pathlossEstimated-rxx.

In some examples, pathlossEstimated-rxx may indicate that pathloss is a significant cause of reduced or weak uplink coverage for the eNB. For theses examples, either the eNB or the control element for the wireless network may cause mitigation actions to be taken similar to the mitigation actions described above for FIG. 6.

This disclosure is not limited to only the three example IE formats described above for FIGS. 5-7. Other message and/or IE formats are contemplated by this disclosure that may convey MDT information to an eNB or a wireless network control element.

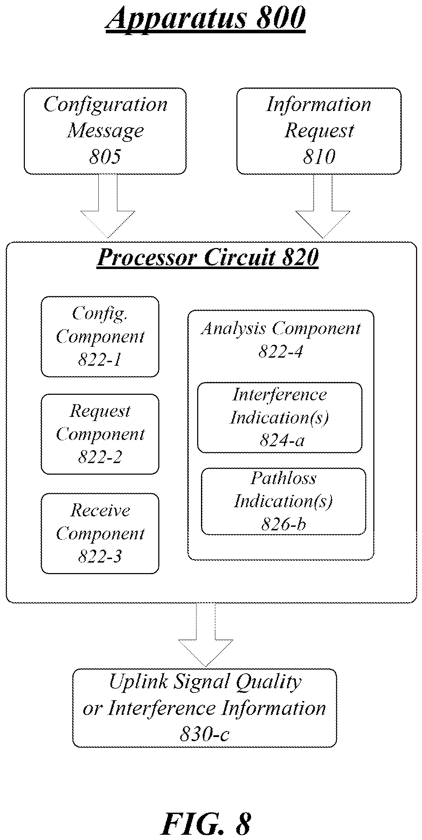

**FIG. 8** illustrates a block diagram for an apparatus 800. Although the apparatus 800 shown in FIG. 8 has a limited number of elements in a certain topology, it may be appreciated that the apparatus 800 may include more or less elements in alternate topologies as desired for a given implementation.

The apparatus 800 may comprise a computer-implemented apparatus 800 having a processor circuit 820 arranged to execute one or more software components *822-a*. It is worthy to note that "*a*" and "*b*" and "*c*" and similar designators as used herein are intended to be variables representing any positive integer. Thus, for example, if an implementation sets a value for *a* = 5, then a complete set of software components 822-*a* may include components 822-1, 822-2, 822-3, 822-4 and 822-5. The embodiments are not limited in this context.

According to some examples, apparatus 800 may be system equipment (e.g., located at or with base station 112), such as network equipment for a communications system or network compliant with one or more 3GPP LTE specifications or standards. For example, apparatus 800 may be implemented as part of a base station or eNB of a wireless network arranged to operate in compliance with one or more LTE and/or LTE-A standards. Although some examples are described with reference to a base station or eNB, examples may utilize any network equipment for a communications system or network. The examples are not limited in this context.

In some examples, as shown in FIG. 8, apparatus 800 includes processor circuit 820. Processor circuit 820 may be generally arranged to execute one or more software components 822-*a*. The processing circuit 820 can be any of various commercially available processors, including without limitation an AMD® Athlon®, Duron® and Opteron® processors; ARM® application, embedded and secure processors; IBM® and Motorola® DragonBall® and PowerPC® processors; IBM and Sony® Cell processors; Intel® Celeron®, Core (2) Duo®, Core i3, Core i5, Core i7, Itanium®, Pentium®, Xeon®, and XScale® processors; and similar processors. Dual microprocessors, multi-core processors, and other multi-processor architectures may also be employed as processing circuit 820.

According to some examples, apparatus 800 may include a configuration component 822-1. Configuration component 822-1 may be arranged for execution by processor circuit 820 to configure a wireless device (e.g., UE 114) coupled to a wireless network through a base station that may include apparatus 800. For these examples, configuration component 822-1 may generate or cause a configuration message 805 (e.g., in the format of example configuration message format 200) to be transmitted from the base station. Configuration message 805, once received by the wireless device, may direct the wireless device to measure uplink signal quality or interference characteristics for one or more communication links (e.g., communication link 116) between the wireless device and one or more base stations. The one or more base stations may include the base station that sent the configuration message as well as other base stations of the wireless network.

In some examples, apparatus 800 may also include a request component 822-2. Request component 822-2 may be arranged for execution by processor circuit 820 to cause an information request 810 (e.g., in the format of example information request format 300) to be transmitted to the wireless device. Information request 810 may include a request to receive uplink signal quality or interference information.

According to some examples, apparatus 800 may also include a receive component 822-3. Receive component 822-3 may be arranged for execution by processor circuit 820 to receive uplink signal quality or interference information 830-c from the wireless device configured based on information request 810. For these examples, uplink signal quality or interference information 830-c may be based on or associated with measured uplink signal quality (e.g., pathloss) or interference (e.g., value for $P_{0\_NOMINAL\_PUCCH}$) characteristics. Uplink signal quality or interference information 830-c may have been logged by the wireless device up until the point in time that information request 810 was received from the base station including apparatus 800.

In some examples, apparatus 800 may also include an analysis component 822-4. Analysis component 822-4 may be arranged for execution by processor circuit 820 to analyze uplink interference or pathloss associated with uplink coverage provided by the one or more base stations for the wireless network. For these examples, the analysis may be based on the received uplink signal quality or interference information 830-c. According to some examples, the analysis may include determining interference indications 824-a (e.g., $IoT_{Estimated}$ values) or pathlosss indications 826-b (e.g., $PL_c$ values). Interference indication(s) 824-a or pathloss indication(s) 826-b may be at least temporarily stored in a data structure such as a lookup table (LUT). The base station may use information associated with interference indications 824-a or pathloss indication(s) 826-b to adjust one or more operating parameters to possibly mitigate reduced or weak uplink coverage for the base station in the general vicinity of the wireless device.

Included herein is a set of logic flows representative of example methodologies for performing novel aspects of the disclosed architecture. While, for purposes of simplicity of explanation, the one or more methodologies shown herein are shown and described as a series of acts, those skilled in the art will understand and appreciate that the methodologies are not limited by the order of acts. Some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all acts illustrated in a methodology may be required for a novel implementation.

A logic flow may be implemented in software, firmware, and/or hardware. In software and firmware embodiments, a logic flow may be implemented by computer executable instructions stored on at least one non-transitory computer readable medium or machine readable medium, such as an optical, magnetic or semiconductor storage. The embodiments are not limited in this context.

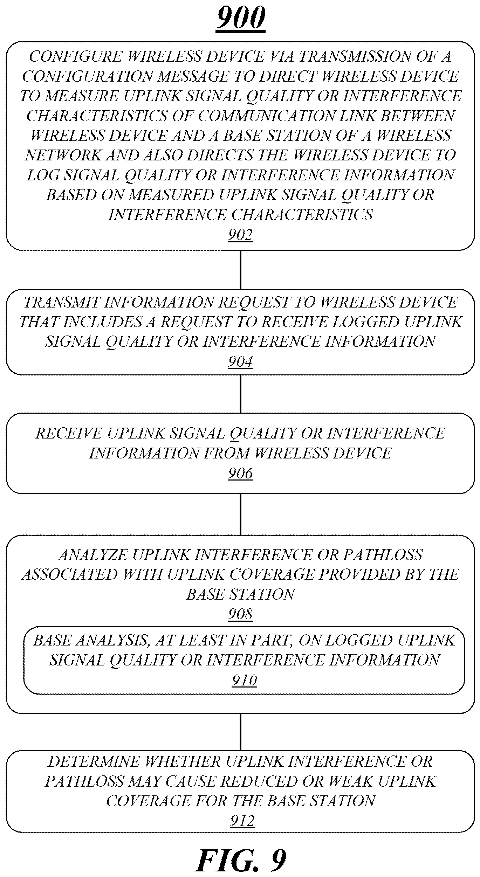

**FIG. 9** illustrates an example of a logic flow 900. Logic flow 900 may be representative of some or all of the operations executed by one or more logic, features, or devices described herein, such as apparatus 800. More particularly, logic flow 900 may be implemented by configuration component 822-1, request component 822-2, receive component 822-3 or analysis component 822-4.

In the illustrated example shown in FIG. 9, logic flow 900 may configure a wireless device via transmission of a configuration message at block 902. In some examples apparatus 800 may cause configuration message 805 to be transmitted from a base station such as base station 112 to a wireless device such as UE 114. Configuration message 805 may direct UE 114 to measure uplink signal quality or interference characteristics of a communication link between base station 112 and UE 114 such as communication link 116. Configuration message 805 may also direct UE 114 to log uplink signal quality or interference information that is based on measured uplink signal quality or interference characteristics.

Logic flow 900 at block 904 may then transmit an information request to the wireless device that includes a request to receive the logged uplink signal quality or interference information. According to some examples, request component 822- 2 of apparatus 800 may cause information request 810 to be transmitted from base station 112 to UE 114 via communication link 116.

Logic flow 900 at block 906 may receive uplink signal quality or interference information from the wireless device. In some examples, receive component 822-3 of apparatus 800 may receive uplink signal quality or interference information 830-c from UE 114.

Logic flow 900 at block 908 may analyze uplink interference or pathloss associated with uplink coverage provided by the base station. Also, at block 910, logic flow 900 may base the analysis on the received uplink signal quality or interference information. According to some examples, analysis component 822-4 may use the received uplink signal quality or interference information 830-c for the analysis.

Logic flow 900 at block 912 may determine whether uplink interference or pathloss may cause reduced or weak uplink coverage for the base station. In some examples, analysis component 822-4 of apparatus 800 may utilize interference indication(s) 824-a or pathloss indication(s) 826-b to make the determination of possible causes of reduced or weak uplink coverage for base station 112 in or around the location or vicinity of UE 114. According to some examples, the determination and adjustments to operating parameters may also be based on the time or location of UE 114 when UE 114 measured uplink signal quality or interference characteristics associated with communication link 116.

Various components of apparatus 800 and a device implementing apparatus 800 may be communicatively coupled to each other by various types of communications media to coordinate operations. The coordination may involve the uni-directional or bidirectional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Example connections include parallel interfaces, serial interfaces, and bus interfaces.

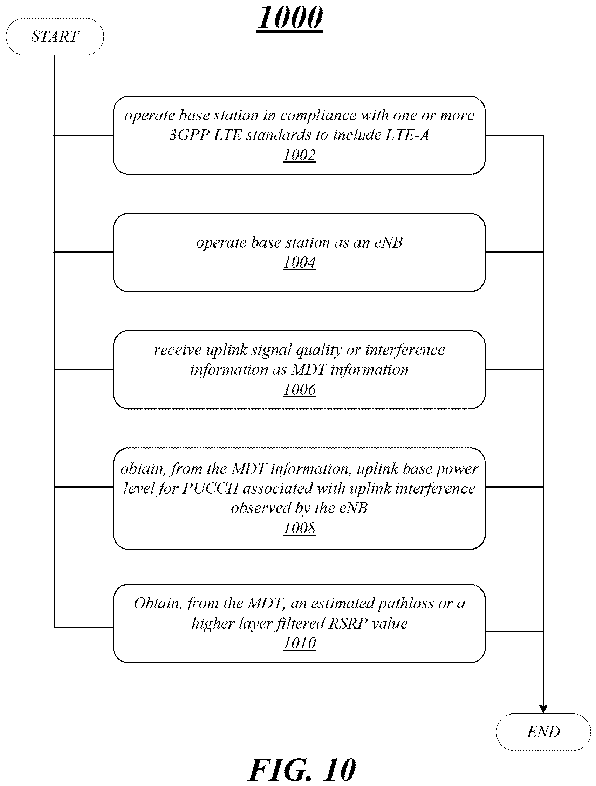

**FIG. 10** illustrates an example of a logic flow 1000. Logic flow 1000 may be representative of some or all of the operations executed by one or more logic, features, or devices described herein, such as apparatus 800. More particularly, logic flow 1000 may be implemented by configuration component 822-1, request component 822-2, receive component 822-3 or analysis component 822-4.

In the illustrated example shown in FIG. 10, logic flow 1000 may operate a base station in compliance with one or more 3GPP LTE standards or specifications to include standards associated with LTE-A at block 1002. For example, the base station 112 depicted in FIG. 1 may be arranged to operate in compliance with one or more standards associated with LTE-A.

According to some examples, logic flow 1000 may operate base station 112 as an eNB at block 1004. For example, base station 112 may be arranged to operate as an eNB for cell 110 in wireless network 100.

In some examples, logic flow 1000 may receive uplink signal quality or interference information as MDT information from a wireless device at block 1006. For example, components of apparatus 800 at base station 112 such as receive component 822-1 may receive uplink signal quality or interference information 830-c from UE 114 via communication link 116. The MDT information may be included in one or more IEs in the example formats of IE formats 500, 600 or 700 as mentioned above for FIGS. 5, 6 and 7, respectively.

According to some examples, logic flow 1000 may obtain, from the MDT information, uplink base power level for PUCCH associated with uplink interference at block 1008. For example, components of apparatus 800 at base station 112 such as analysis component 822-4 may obtain the uplink base power level for PUCCH associated with uplink interference from the received uplink signal quality or interference information 830-c. For this example, analysis component 822-4 may use the obtained uplink base power level for PUCCH associated with uplink interference to determine an $IoT_{Estimated}$ value. Analysis component 822-4 may then utilize the determined $IoT_{Estimated}$ value in an analysis of whether high levels of interference may be a cause of reduced or weak uplink coverage for base station 112 to UE 114.

According to some examples, logic flow 1000 may also obtain, from the MDT information, an estimated pathloss or a higher layer filtered RSRP value at block 1010. For example, components of apparatus 800 at base station 112 such as analysis component 822-4 may obtain either a higher layer filtered value for RSRP or an estimated value for $PL_c$ from the received uplink signal quality or interference information 830-c. For this example, analysis component 822-4 may use the higher layer filtered value for RSRP or the estimated value for $PL_c$ to determine pathloss associated with uplink signals between base station 112 and UE 114 via communication link 116. Analysis component 822-4 may then utilize the determined pathloss in an analysis of whether high levels of pathloss may be a cause of reduced or weak uplink coverage for base station 112 to UE 114.

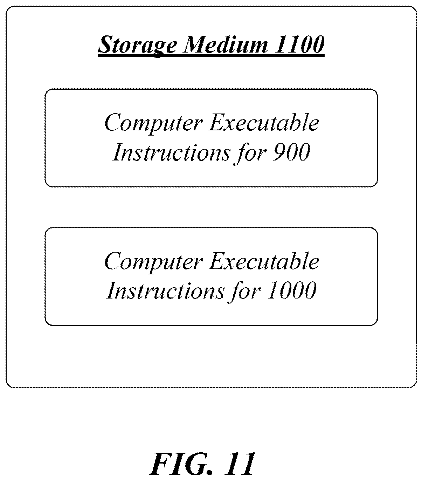

**FIG. 11** illustrates an embodiment of a storage medium 1100. The storage medium 1100 may comprise an article of manufacture. In some examples, storage medium 1100 may include any non-transitory computer readable medium or machine readable medium, such as an optical, magnetic or semiconductor storage. Storage medium 1100 may store various types of computer executable instructions, such as instructions to implement one or more of the logic flows 900 and/or 1000. Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

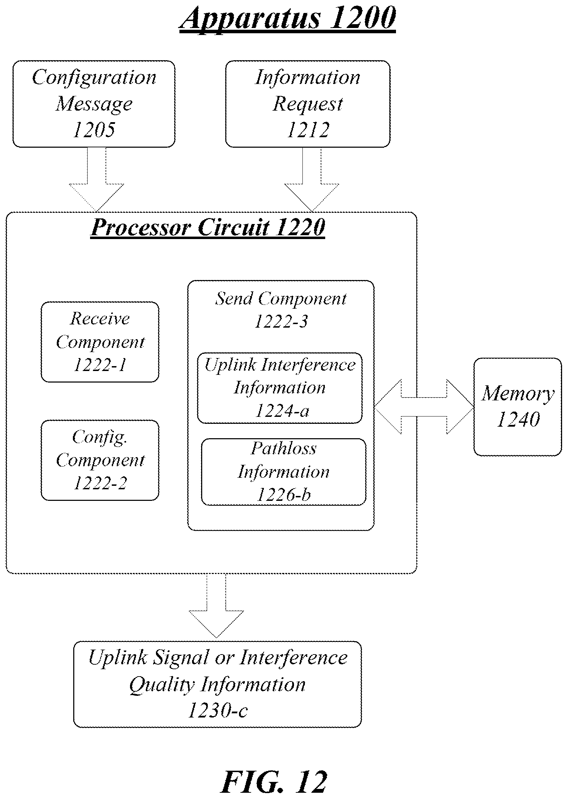

**FIG. 12** illustrates a block diagram for an apparatus 1200. Although the apparatus 1200 shown in FIG. 12 has a limited number of elements in a certain topology, it may be appreciated that the apparatus 1200 may include more or less elements in alternate topologies as desired for a given implementation.

The apparatus 1200 may comprise a computer-implemented apparatus 1200 having a processor circuit 1220 arranged to execute one or more software components 1222-a. Similar to apparatus 800 for FIG. 8, "a" and "b" and "c" are intended to be variables representing any positive integer.

According to some examples, apparatus 1200 may be located at or with a wireless device (e.g., located at or with UE 114), compliant with one or more 3GPP LTE specifications or standards. For example, apparatus 1200 may be implemented as part of a wireless device arranged to operate in compliance with one or more LTE and/or LTE-A standards.

In some examples, as shown in FIG. 12, apparatus 1200 includes processor circuit 1220. Processor circuit 1220 may be generally arranged to execute one or more software components 1222-a. The processing circuit 1220 can be any of the various commercially available processors as mentioned previously for apparatus 800 for FIG. 8. Dual microprocessors, multi-core processors, and other multi-processor architectures may also be employed as processing circuit 1220.

According to some examples, apparatus 1200 may include a receive component 1222-1. Receive component 1222-1 may be arranged for execution by processor circuit 1220 to receive a configuration message 1205 (e.g., in the format of example format 200) and an information request 1210 (e.g., in the format of example format 300) from a base station (e.g., base station 112) of a wireless network (e.g., wireless network 100).

In some examples, apparatus 1200 may also include a configuration (config.) component 1222-2. Config.

component 1222-2 may be arranged for execution by processor circuit 1220 to cause the wireless device including apparatus 1200 to measure uplink signal quality or interference characteristics for a communication link (e.g., communication link 116) between the wireless device and the base station. Config. Component 1222-2 may also cause the wireless device to log uplink signal quality or interference information associated with the measured uplink signal quality or interference characteristics. For these examples, config. component 1222-2 may cause the wireless device to measure and log information associated with the measurements based on the received configuration message 1205.

According to some examples, apparatus 1200 may also include a send component 1222-3. Send component 1222-3 may be arranged for execution by processor circuit 1220 to send uplink signal quality or interference information 1230-c. The uplink signal quality or interference information 1230-c may be sent responsive to receipt of information request 1210 from the base station. For these examples, interference information 1230-c may be based on information indicating or associated with measured uplink signal quality (e.g., pathloss) or interference (e.g., value for $P_{0\_NOMINAL\_PUCCH}$) characteristics. Information associated with these characteristics may be logged as uplink interference information 1224-a or pathloss information 1226-b. In some examples, uplink interference information 1224-a or pathloss information 1226-b may be at least temporarily stored in a data structure such as a lookup table (LUT).

In some examples, apparatus 1200 may also include a memory 1240. Alternatively or in addition to a LUT, memory 1240 may be arranged to enable apparatus 1200 to at least temporarily maintain uplink interference information 1224-a or pathloss information 1226-b. Memory 1240 may be various types of memory to include, but not limited to read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, solid state memory devices (e.g., USB memory), solid state drives (SSD) or any other type of storage media suitable for storing information.

Included herein is a set of logic flows representative of example methodologies for performing novel aspects of the disclosed architecture.

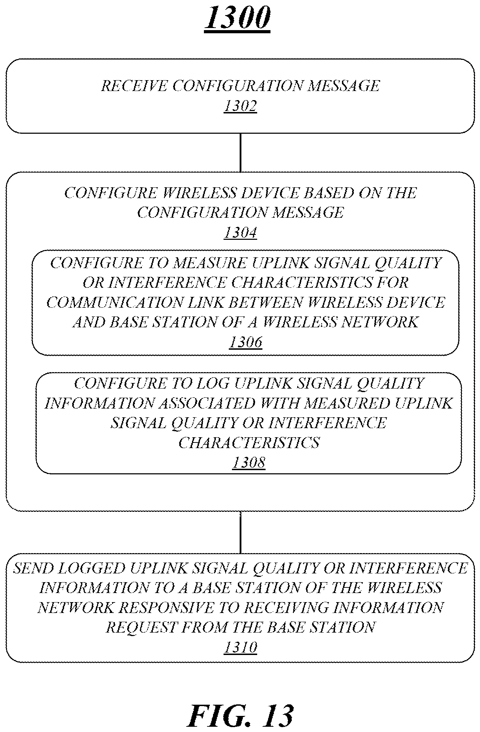

FIG. 13 illustrates an example of a logic flow 1300. Logic flow 1300 may be representative of some or all of the operations executed by one or more logic, features, or devices described herein, such as apparatus 1200. More particularly, logic flow 1300 may be implemented by elements of apparatus 1200 located at a wireless device to include, but not limited to, a receive component 1222-1, config. component 1222-2 or send component 1222-3.

In the illustrated example shown in FIG. 13, logic flow 1300 may receive a configuration message at block 1302. In some examples receive component 1222-1 of apparatus 1200 may receive configuration message 1205 from a base station such as base station 112 of wireless network 100.

Logic flow at 1300 at block 1304 may then configure the wireless device based on the received configuration message (e.g., configuration message 1205). In some examples, logic flow 1300 at block 1306 may configure the wireless device to measure uplink signal quality or interference characteristics for a communication link (e.g., communication link 116) between the wireless device and a base station (e.g., base station 112) of a wireless network (e.g., wireless network 100). The logic flow at block 1308 may also configure the wireless device to log uplink signal quality or interference information associated with measured uplink signal quality or interference characteristics. According to some examples, information associated with these characteristics may be logged as uplink interference information 1224-a or pathloss information 1226-b.

Logic flow 1300 at block 1310 may send uplink signal quality or interference information to the base station responsive to receiving an information request from the base station. In some examples, receive component 1222-1 of apparatus 1200 may receive information request 1210 from base station 112 and then send component 1222-3 may send uplink signal quality or interference information 830-c. For these examples, base station 112 or a control element of wireless network 100 may analyze uplink interference or pathloss associated with uplink coverage provided by base station 112 based on the sent uplink signal quality or interference information 830-c.

Various components of apparatus 1200 and a device implementing apparatus 1200 may be communicatively coupled to each other by various types of communications media to coordinate operations. The coordination may involve the uni-directional or bidirectional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Example connections include parallel interfaces, serial interfaces, and bus interfaces.

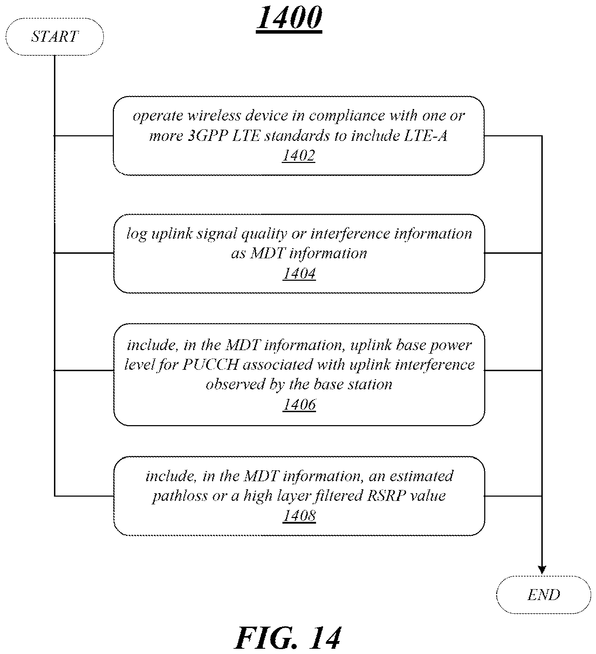

FIG. 14 illustrates an example of a logic flow 1400. Logic flow 1400 may be representative of some or all of the operations executed by one or more logic, features, or devices described herein, such as apparatus 1200. More particularly, logic flow 1400 may be implemented by receive component 1222-1, config. component 1222-2, or send component 1222-3.

In the illustrated example shown in FIG. 14, logic flow 1400 may operate at least some functions of a wireless device in compliance with one or more 3GPP LTE standards or specifications to include standards associated with LTE-A at block 1402. For example, UE 114 depicted in FIG. 1 may be arranged to operate in compliance with one or more standards associated with LTE-A. For this example, UE 114 may be configured to measure uplink signal quality or interference characteristics and log information associated with these characteristics upon receipt of a LoggedMeasurementConfiguration IE as described in the one or more 3 GPP LTE standards to include LTE-A.

In some examples, logic flow 1400 may log uplink signal quality or interference information as MDT information at the wireless device at block 1404. For example, components of apparatus 1200 at wireless device 114 such as config. component 1222-2 may cause wireless device 114 to log uplink signal quality or interference information 1230-c as uplink interference information 1224-a or pathloss information 1226-b. For this example, uplink interference information 1224-a or pathloss information 1226-b may be maintained in a LUT and/or memory 1240.

Logic flow 1400 may include, in the MDT information, an uplink base power level for PUCCH associated with uplink interference possibly observed by the base station at block 1406. According to some examples, the MDT information may be included in uplink signal quality or interference information 1230-c by send component 1222-3 and sent to base station 112 (e.g., in an IE in the format of IE format 500). Upon receipt of this MDT information, base station 112 may then use the uplink base power level for PUCCH to determine an $IoT_{Estimated}$ value. Logic and/or features at base station 112 (e.g., analysis component 822-4) may then utilize the determined $IoT_{Estimated}$ value in an analysis of whether high levels of interference may be a cause of reduced or weak uplink coverage for base station 112 to UE 114.

Logic flow 1400 may also obtain, from the MDT information, an estimated pathloss or a higher layer filtered RSRP value at block 1410. In some examples, the MDT information may also be included in uplink signal quality or interference information 1230-c by send component 1222-3 and sent to base station 112 (e.g., in an IE in the format of IE format 600 or 700). Upon receipt of this MDT information, base station 112 may use either the higher layer filtered value for RSRP or the estimated pathloss to determine pathloss associated with uplink signals between base station 112 and UE 114 via communication link 116. Logic and/or features at base station 112 (e.g., analysis component 822-4) may then utilize the determined pathloss in an analysis of whether high levels of pathloss may be a cause of reduced or weak uplink coverage for base station 112 to UE 114.

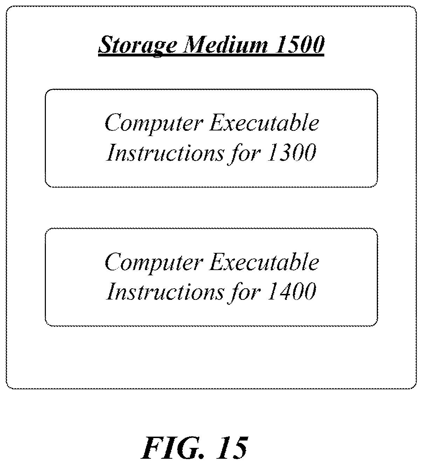

**FIG. 15** illustrates an embodiment of a storage medium 1500. The storage medium 1500 may comprise an article of manufacture. In some examples, storage medium 1500 may include any non-transitory computer readable medium or machine readable medium, such as an optical, magnetic or semiconductor storage. Storage medium 1500 may store various types of computer executable instructions, such as instructions to implement one or more of the logic flows 1300 and/or 1400.

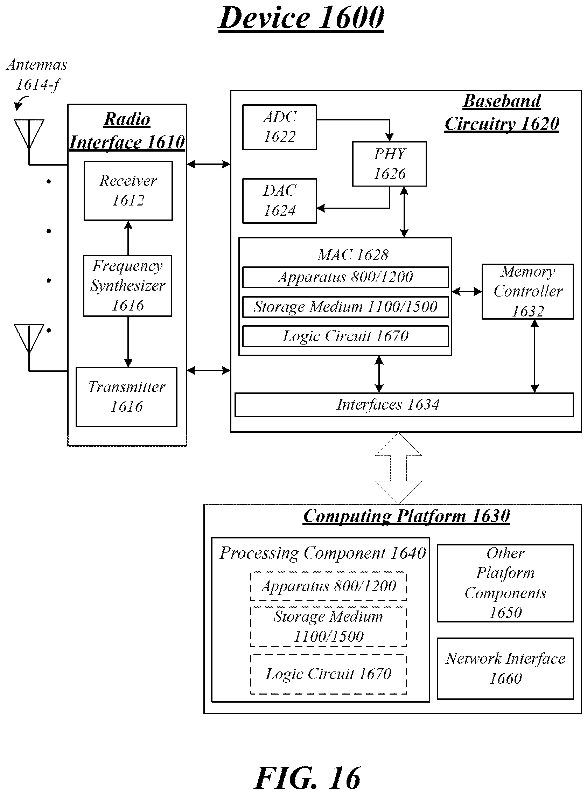

**FIG. 16** illustrates an embodiment of a device 1600 for use in a broadband wireless access network. Device 1600 may implement, for example, apparatus 800/1200, storage medium 1100/1500 and/or a logic circuit 1670. The logic circuit 1670 may include physical circuits to perform operations described for apparatus 800 or apparatus 1200. As shown in FIG. 16, device 1600 may include a radio interface 1610, baseband circuitry 1620, and computing platform 1630, although examples are not limited to this configuration.

The device 1600 may implement some or all of the structure and/or operations for apparatus 800/1200, storage medium 1100/1500 and/or logic circuit 1670 in a single computing entity, such as entirely within a single device. Alternatively, the device 1600 may distribute portions of the structure and/or operations for at least apparatus 800, storage medium 1100 and/or logic circuit 1670 across multiple computing entities using a distributed system architecture, such as a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

In one embodiment, radio interface 1610 may include a component or combination of components adapted for transmitting and/or receiving single carrier or multi-carrier modulated signals (e.g., including complementary code keying (CCK) and/or orthogonal frequency division multiplexing (OFDM) symbols) although the embodiments are not limited to any specific over-the-air interface or modulation scheme. Radio interface 1610 may include, for example, a receiver 1612, a transmitter 1616 and/or a frequency synthesizer 1614. Radio interface 1610 may include bias controls, a crystal oscillator and/or one or more antennas 1618-*f*. In another embodiment, radio interface 1610 may use external voltage-controlled oscillators (VCOs), surface acoustic wave filters, intermediate frequency (IF) filters and/or RF filters, as desired. Due to the variety of potential RF interface designs an expansive description thereof is omitted.

Baseband circuitry 1620 may communicate with radio interface 1610 to process receive and/or transmit signals and may include, for example, an analog-to-digital converter 1622 for down converting received signals and a digital-to-analog converter 1624 for up converting signals for transmission. Further, baseband circuitry 1620 may include a baseband or physical layer (PHY) processing circuit 1626 for PHY link layer processing of respective receive/transmit signals. Baseband circuitry 1620 may include, for example, a processing circuit 1628 for medium access control (MAC)/data link layer processing. Baseband circuitry 1620 may include a memory controller 1632 for communicating with MAC processing circuit 1628 and/or a computing platform 1630, for example, via one or more interfaces 1634.

In some embodiments, PHY processing circuit 1626 may include a frame construction and/or detection module, in combination with additional circuitry such as a buffer memory, to construct and/or deconstruct communication frames (e.g., containing subframes). Alternatively or in addition, MAC processing circuit 1628 may share processing for certain of these functions or perform these processes independent of PHY processing circuit 1626. In some embodiments, MAC and PHY processing may be integrated into a single circuit.

Computing platform 1630 may provide computing functionality for device 1600. As shown, computing platform 1630 may include a processing component 1640. In addition to, or alternatively of, baseband circuitry 1620 of device 1600, processing component 1640 may execute processing operations or logic for apparatus 800/1200, storage medium 1100/1500, and logic circuit 1670 using the processing component 1640. Processing component 1640 (and/or PHY 1626 and/or MAC 1628) may comprise various hardware elements, software elements, or a combination of both. Examples of hardware elements may include devices, logic devices, components, processors, microprocessors, circuits, processor circuits (e.g., processor circuit 820 in FIG. 8 or processor circuit 1220 in FIG. 12), circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

Computing platform 1630 may further include other platform components 1650. Other platform components 1650 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as ROM, RAM, DRAM, DDRAM, SDRAM, SRAM, PROM, EPROM, EEPROM, flash memory, polymer memory such as ferroelectric polymer memory, ovonic memory, phase change or ferroelectric memory, SONOS memory, magnetic or optical cards, an array of devices such as Redundant Array of Independent Disks (RAID) drives, solid state memory devices (e.g., USB memory), solid state drives (SSD) or any other type of storage media suitable for storing information.

Computing platform 1630 may further include a network interface 1660. In some examples, network interface 1660 may include logic and/or features to support network communication between a base station and a wireless device in compliance with one or more 3GPP LTE or LTE-A specifications or standards. For these examples, network interface 1660 may enable an apparatus 800 located at a base station or an apparatus 1200 located at a wireless device to communicatively couple to base station to base station (e.g., via X2 communication channel) or communicatively couple base station to wireless device (e.g., via a wireless communication link).

Device 1600 may be, for example, user equipment, a computer, a personal computer (PC), a desktop computer, a laptop computer, a notebook computer, a netbook computer, a server, a server array or server farm, a web server, a network server, an Internet server, a work station, a mini-computer, a main frame computer, a supercomputer, a network appliance, a web appliance, a distributed computing system, multiprocessor systems, processor-based systems, wireless access point, base station, node B, subscriber station, mobile subscriber center, radio network controller, router, hub, gateway, bridge, switch, machine, or combination thereof. Accordingly, functions and/or specific configurations of device 1600 described herein, may be included or omitted in various embodiments of device 1600, as suitably desired. In some embodiments, device 1600 may be configured to be compatible with protocols and frequencies associated one or more of the 3GPP LTE Specifications and/or IEEE 802.16 Standards for WMANs, and/or other broadband wireless networks, cited herein, although the examples are not limited in this respect.

Embodiments of device 1600 may be implemented using single input single output (SISO) architectures. However, certain implementations may include multiple antennas (e.g., antennas 1618-*f*) for transmission and/or reception using adaptive antenna techniques for beamforming or spatial division multiple access (SDMA) and/or using multiple input multiple output (MIMO) communication techniques.

The components and features of device 1600 may be implemented using any combination of discrete circuitry, application specific integrated circuits (ASICs), logic gates and/or single chip architectures. Further, the features of device 1600 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 1600 shown in the block diagram of FIG. 16 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

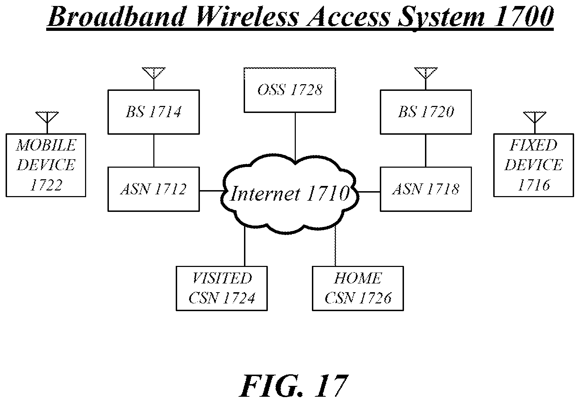

**FIG. 17** illustrates an embodiment of a broadband wireless access system 1700. As shown in FIG. 17, broadband wireless access system 1700 may be an Internet protocol (IP) type network comprising an Internet 1710 type network or the like that is capable of supporting mobile wireless access and/or fixed wireless access to Internet 1710. In one or more embodiments, broadband wireless access system 1700 may comprise any type of orthogonal frequency division multiple access (OFDMA) based wireless network, such as a system compliant with one or more of the 3GPP LTE Specifications and/or IEEE 802.16 Standards, and the scope of the claimed subject matter is not limited in these respects.

In the exemplary broadband wireless access system 1700, access service networks (ASN) 1714, 1718 are capable of coupling with base stations (BS) 1714, 1720 (or eNBs), respectively, to provide wireless communication between one or more fixed devices 1716 and Internet 1710, or one or more mobile devices 1722 and Internet 1710. One example of a fixed device 1716 and a mobile device 1722 is UE 114, with the fixed device 1716 comprising a stationary version of UE 114 and the mobile device 1722 comprising a mobile version of UE 114. ASN 1712 may implement profiles that are capable of defining the mapping of network functions to one or more physical entities on broadband wireless access system 1700. Base stations 1714, 1720 (or eNBs) may comprise radio equipment to provide RF communication with fixed device 1716 and mobile device 1722, such as described with reference to device 1700, and may comprise, for example, the PHY and MAC layer equipment in compliance with a 3GPP LTE Specification or an IEEE 802.16 Standard. Base stations 1714, 1720 (or eNBs) may further comprise an IP backplane to couple to Internet 1710 via ASN 1712, 1718, respectively, although the scope of the claimed subject matter is not limited in these respects.

Broadband wireless access system 1700 may further comprise a visited connectivity service network (CSN) 1724 capable of providing one or more network functions including but not limited to proxy and/or relay type functions, for example authentication, authorization and accounting (AAA) functions, dynamic host configuration protocol (DHCP) functions, or domain name service controls or the like, domain gateways such as public switched telephone network (PSTN) gateways or voice over Internet protocol (VoIP) gateways, and/or Internet protocol (IP) type server functions, or the like. However, these are merely example of the types of functions that are capable of being provided by visited CSN 1724 or home CSN 1726, and the scope of the claimed subject matter is not limited in these respects. Visited CSN 1724 may be referred to as a visited CSN in the case where visited CSN 1724 is not part of the regular service provider of fixed device 1716 or mobile device 1722, for example where fixed 1716 or mobile device 1722 is roaming away from their respective home CSN 1726, or where broadband wireless access system 1700 is part of the regular service provider of fixed device 1716 or mobile device 1722 but where broadband wireless access system 1700 may be in another location or state that is not the main or home location of fixed device 1716 or mobile device 1722.

Fixed device 1716 may be located anywhere within range of one or both base stations 1714, 1720, such as in or near a home or business to provide home or business customer broadband access to Internet 1710 via base stations 1714, 1720 and ASN 1712, 1718, respectively, and home CSN 1726. It is worthy to note that although fixed device 1716 is generally disposed in a stationary location, it may be moved to different locations as needed. Mobile device 1722 may be utilized at one or more locations if mobile device 1722 is within range of one or both base stations 1714, 1720, for example.

In accordance with one or more embodiments, operation support system (OSS) 1728 may be part of broadband wireless access system 1700 to provide management functions for broadband wireless access system 1700 and to provide interfaces between functional entities of broadband wireless access system 1700. Broadband wireless access system 1700 of FIG. 17 is merely one type of wireless network showing a certain number of the components of broadband wireless access system 1700, and the scope of the claimed subject matter is not limited in these respects.

Some examples may be described using the expression "in one example" or "an example" along with their derivatives. These terms mean that a particular feature, structure, or characteristic described in connection with the example is included in at least one example. The appearances of the phrase "in one example" in various places in the specification are not necessarily all referring to the same example.

Some examples may be described using the expression "coupled", "connected", or "capable of being coupled" along with their derivatives. These terms are not necessarily intended as synonyms for each other. For example, descriptions using the terms "connected" and/or "coupled" may indicate that two or more elements are in direct physical or electrical contact with each other. The term "coupled," however, may also mean that two or more elements are not in direct contact with each other, but yet still cooperate or interact with each other.

It is emphasized that the Abstract of the Disclosure is provided to comply with 37 C.F.R. Section 1.72(b), requiring an abstract that will allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single example for the purpose of streamlining the disclosure. This method of disclosure is not to be interpreted as reflecting an intention that the claimed examples require more features than are expressly recited in each claim. Rather, as the following claims reflect, inventive subject matter lies in less than all features of a single disclosed example. Thus the following claims are hereby incorporated into the Detailed Description, with each claim standing on its own as a separate example. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

In some examples, first computer-implemented methods may include transmitting, from a base station of a wireless network, an information request to a wireless device coupled to the wireless network through the base station. The information request may include a request to receive logged uplink signal quality or interference information. For these examples, the uplink signal quality or interference information may be received from the wireless device and uplink interference or pathloss associated with uplink coverage provided by one or more base stations for the wireless network may be analyzed. The analysis may be based, at least in part, on the logged uplink signal quality or interference information received from the wireless device.

According to some examples, the first computer-implemented methods may also include configuring the wireless device via transmitting a configuration message to the wireless device. The configuration message may direct the wireless device to measure uplink signal quality or interference characteristics for one or more communication links between the wireless device and one or more base stations of the wireless network. The communication message may also direct the wireless device to log uplink signal quality or interference information associated with the measured uplink signal quality or interference characteristics.

In some examples, the first computer-implemented methods may also include the uplink signal quality or interference information including an indication of one or more uplink base power levels associated with uplink interference observed by the one or more base stations. The uplink signal quality or interference information may also include an indication of pathloss for one or more communication links between the wireless device and the one or more base stations.

According to some examples, the first computer-implemented methods may also include analyzing uplink interference or pathloss by determining whether uplink interference or pathloss is a cause of reduced uplink coverage for at least one base station from among the one or more base stations.

According to some examples, the first computer-implemented methods may also include operating the base station in compliance with one or more or more 3GPP LTE standards to include LTE-A. For these examples, the base station may be operated as an eNB and the uplink signal quality or interference may be MDT information. The MDT information may include one of an uplink base power level for PUCCH associated with uplink interference observed by the eNB, an estimated pathloss, or a higher layer filtered RSRP value.

According to some examples, at least one machine readable medium comprising a plurality of instructions that in response to being executed on a computing device cause the computing device to carry out the example first computer-implemented methods as mentioned above.

In some examples an apparatus or device may include means for performing the example first computer-implemented methods as mentioned above.

In some examples, second computer-implemented methods may include receiving, at a wireless device coupled to a wireless network, a configuration message. The wireless device may be configured based, at least in part, on the configuration message directing measurement of uplink signal quality or interference characteristics for one or more communication links between the wireless device and one or more base stations of the wireless network. The wireless device may also be configured based, at least in part, on the configuration message directing logging of uplink signal quality or interference information associated with the measured uplink signal quality or interference characteristics. For these examples, logged uplink signal quality or interference information may be sent to a base station of the wireless network responsive to receiving an information request from the base station. The logged uplink signal quality or interference information may be sent to enable the base station or the wireless network to analyze uplink interference or pathloss associated with uplink coverage provided by the one or more base stations for the wireless network to the wireless device.

According to some examples, the second computer-implemented methods may also include receiving the configuration message from the base station.

In some examples, the second computer-implemented methods may also include the wireless device arranged to log uplink signal quality or interference information via a memory maintained at the wireless device.

According to some examples, the second computer-implemented methods may also include the uplink signal quality or interference information including an indication of one or more uplink base power levels associated with uplink interference observed by the one or more base stations or an indication of pathloss for the one or more communication links between the wireless device and the one or more base stations.

In some examples, the second computer-implemented methods may also include operating the wireless device in compliance with one or more or more 3GPP LTE standards to include LTE-A. For these examples, the uplink signal quality or interference may be MDT information. The MDT information may include one of an uplink base power level for PUCCH associated with uplink interference observed by the base station, an estimated pathloss, or a higher layer filtered RSRP value.

According to some examples, the second computer-implemented methods may also include a wireless device operating in compliance with the one or more or more 3GPP LTE standards to include LTE-A to receive the configuration message as a LoggedMeasurementConfiguration IE.

According to some examples, at least one machine readable medium comprising a plurality of instructions that in response to being executed on a computing device cause the computing device to carry out the example second computer-implemented methods as mentioned above.

In some examples an apparatus or device may include means for performing the example second computer-implemented methods as mentioned above.

According to some examples, an example first apparatus at a base station may include a processor circuit and a request component arranged for execution by the processor circuit to cause an information request to be transmitted to a wireless device coupled to the wireless network through the base station. The information request may include a request to receive uplink signal quality or interference information. The example first apparatus may also include a receive component arranged for execution by the processor circuit to receive the uplink signal quality or interference information from the wireless device. The example first apparatus may also include an analysis component arranged for execution by the processor circuit to analyze uplink interference or pathloss associated with uplink coverage provided by one or more base stations for the wireless network based, at least in part, on the logged uplink signal quality or interference information received from the wireless device.

In some examples, the example first apparatus also includes a radio interface coupled to the processor circuit to transmit the information request to the wireless device or facilitate receipt of the uplink signal quality or interference information.

According to some examples, the example first apparatus also includes a configuration component arranged for execution by the processor circuit to configure the wireless device by causing a configuration message to be transmitted. The configuration message may direct the wireless device to measure uplink signal quality or interference characteristics for one or more communication links between the wireless device and one or more base stations of the wireless network. The uplink signal quality or interference information to be based on the measured uplink signal quality or interference characteristics.

In some examples for the example first apparatus, the uplink signal quality or interference information may include an indication of one or more uplink base power levels associated with uplink interference observed by the one or more base stations. The uplink signal quality or interference information may also include an indication of pathloss for one or more communication links between the wireless device and the one or more base stations.

According to some examples for the example first apparatus, the analysis component may also be arranged to determine whether uplink interference or pathloss is a cause of reduced or weak uplink coverage for at least one base station from among the one or more base stations.

In some examples for the example first apparatus, the base station may be arranged to operate as eNB in compliance with one or more or more 3GPP LTE standards to include LTE-A. For these examples, the uplink signal quality or interference information received from the wireless device as MDT information. The MDT information may include one of an uplink base power level for PUCCH associated with uplink interference observed by the eNB, an estimated pathloss, or a higher layer filtered RSRP result.

In some examples for the example first apparatus, a digital display coupled to the processor circuit may present a user interface view.

According to some examples, an example second apparatus at a base station may include means for transmitting, from a base station of a wireless network, an information request to a wireless device coupled to the wireless network through the base station. The information request may include a request to receive uplink signal quality or interference information. The example second apparatus may also include means for receiving the uplink signal quality or interference information from the wireless device. The example second apparatus may also include means for analyzing uplink interference or pathloss associated with uplink coverage provided by one or more base stations for the wireless network based, at least in part, on the logged uplink signal quality or interference information received from the wireless device.

In some examples, the example second apparatus may also include means for configuring the wireless device via transmitting a configuration message to the wireless device that directs the wireless device to measure uplink signal quality or interference characteristics for one or more communication links between the wireless device and one or more base stations of the wireless network, the uplink signal quality or interference information to be based on the measured uplink signal quality or interference characteristics.

According to some examples for the example second apparatus, the uplink signal quality or interference information may include an indication of one or more uplink base power levels associated with uplink interference observed by the one or more base stations or may include an indication of pathloss for one or more communication links between the wireless device and the one or more base stations.

In some examples, the example second apparatus may also include means for operating the base station as an eNB in compliance with one or more or 3GPP LTE standards to include LTE-A. For these examples, the uplink signal quality or interference information received from the wireless device as MDT information. The MDT information may include one of an uplink base power level for PUCCH associated with uplink interference observed by the eNB, an estimated pathloss, or a higher layer filtered RSRP result.

According to some examples, an example third apparatus at a base station may include a processor circuit and a receive component arranged for execution by the processor circuit to receive a configuration message and an information request from a base station of a wireless network. The example third apparatus may also include a configuration component arranged for execution by the processor circuit to cause the wireless device to measure uplink signal quality or interference characteristics for a communication link between the wireless device and the base station based on the configuration message. The configuration component may also cause the wireless device to log uplink signal quality or interference information associated with the measured uplink signal quality or interference characteristics based on the configuration message. The example third apparatus may also include a send component arranged for execution by the processor circuit to cause logged uplink signal quality or interference information to be sent to the base station of the wireless network. The send component may send logged uplink signal quality or interference information responsive to the receive component receiving an information request from the base station to enable the base station or the wireless network to analyze uplink interference or pathloss associated with uplink coverage provided by the base station.

In some examples, the example third apparatus may also include a radio interface coupled to the processor circuit to facilitate receipt of the configuration message or to facilitate sending the logged uplink signal quality or interference information to the base station of the wireless network.

According to some examples, the example third apparatus may also include a memory arranged to at least temporarily maintain the logged uplink signal quality or interference information.

In some examples for the example third apparatus, the uplink signal quality or interference information may include an indication of one or more uplink base power levels associated with uplink interference observed by the one or more base stations. the uplink signal quality or interference information may also include or an indication of pathloss for the one or more communication links between the wireless device and the one or more base stations.

According to some examples for the example third apparatus, the wireless device may be arranged to operate in compliance with one or more or more 3GPP LTE standards to include LTE-A. For these examples, the logged uplink signal quality or interference information may be MDT information. The MDT information may include one of an uplink base power level for PUCCH associated with uplink interference observed by the base station, an estimated pathloss, or a higher layer filtered RSRP result.

In some examples for the example third apparatus, a digital display may be coupled to the processor circuit to present a user interface view.

According to some examples, an example fourth apparatus at a base station may include means for receiving, at a wireless device coupled to a wireless network, a configuration message. The example fourth apparatus may also include means for configuring the wireless device based, at least in part, on the configuration message directing measurement of uplink signal quality or interference characteristics for one or more communication links between the wireless device and one or more base stations of the wireless network and directing logging of uplink signal quality or interference information associated with the measured uplink signal quality or interference characteristics. The example fourth apparatus may also include means for causing logged uplink signal quality or interference information to be sent to a base station of the wireless network responsive to receiving an information request from the base station to enable the base station or the wireless network to analyze uplink interference or pathloss associated with uplink coverage provided by the one or more base stations for the wireless network to the wireless device.

In some examples for the example fourth apparatus, the uplink signal quality or interference information including an indication of one or more uplink base power levels associated with uplink interference observed by the one or more base stations or an indication of pathloss for the one or more communication links between the wireless device and the one or more base stations.

According to some examples, the example fourth apparatus may also include means for operating the wireless device in compliance with one or more or 3GPP LTE standards to include LTE-A. For these examples, the logged uplink signal quality or interference information may be MDT information. The MDT information may include one of an uplink base power level for PUCCH associated with uplink interference observed by the base station, an estimated pathloss, or a higher layer filtered RSRP value.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A computer-implemented method comprising:

   transmitting, from a base station of a wireless network, an information request to a wireless device coupled to the wireless network through the base station, the information request to include a request to receive logged uplink signal quality or interference information;
   receiving the uplink signal quality or interference information from the wireless device, the uplink signal quality or interference information comprising Minimization of Drive Tests (MDT) information; and
   analyzing, by the base station, uplink interference or pathloss associated with uplink coverage provided by one or more base stations for the wireless network based, at least in part, on the logged uplink signal quality or interference information received from the wireless device, wherein an estimated Interference over Thermal Noise (IoT) value is determined by subtracting a signal to Interference plus Noise Ratio (SINR) threshold and white noise power from a nominal uplink base power level of a Physical Uplink Control Channel (PUCCH) of the wireless device, said uplink base power level included in said MDT information, and wherein operation parameters of the eNB are adjusted based on the IoT value.

2. The computer-implemented method of claim 1, comprising:

   configuring the wireless device via transmitting a configuration message to the wireless device that directs the wireless device to measure uplink signal quality or interference characteristics for one or more communication links between the wireless device and one or more base stations of the wireless network and directs the wireless device to log uplink signal quality or interference information based on the measured uplink signal quality or interference characteristics.

3. The computer-implemented method of claim 1, the uplink signal quality or interference information including an indication of one or more uplink base power levels associated with uplink interference observed by the one or more base stations or an indication of pathloss for one or more communication links between the wireless device and the one or more base stations.

4. The computer-implemented method of claim 1, analyzing uplink interference or pathloss comprising determining whether uplink interference or pathloss is a cause of reduced or weak uplink coverage for at least one base station from among the one or more base stations.

5. The computer-implemented method of claim 1, comprising operating the base station as an Evolved Node B (eNB) capable of operating in compliance with one or more or more 3rd Generation Partnership Project (3GPP) Long Term Evolution (LTE) standards to include LTE-Advanced (LTE-A).

6. The computer-implemented method of claim 1, the MDT information to include one of an uplink base power level for Physical Uplink Control Channel (PUCCH) associated with uplink interference observed by the eNB, an estimated pathloss, or a higher layer filtered reference signal received power (RSRP) value.

7. At least one machine readable medium comprising a plurality of instructions that in response to being executed on a computing device cause the computing device to carry out a method according to any one of claims 1 to 6.

8. An apparatus comprising means for performing the methods of any one of claims 1 to 6.

**Patentansprüche**

1. Computerimplementiertes Verfahren, umfassend:

   Übertragen, von einer Basisstation eines drahtlosen Netzwerks, einer Informationsanforderung an ein drahtloses Gerät, das mit dem drahtlosen Netzwerk durch die Basisstation verbunden ist, wobei die Informationsanforderung eine Anforderung zum Empfangen der protokollierten Uplink-Signalqualität- oder Interferenzinformationen enthält;
   Empfangen der Uplink-Signalqualität- oder Interferenzinformationen von dem drahtlosen Gerät, wobei die Uplink-Signalqualität- oder Interferenzinformationen Informationen zur Verringerung der Testfahrten (Minimization of Drive Tests, MDT) umfassen; und

Analysieren, durch die Basisstation, der Uplink-Interferenz oder Funkfelddämpfung im Zusammenhang mit der Uplink-Abdeckung, die von einer oder mehreren Basisstationen für das drahtlose Netzwerk zumindest teilweise basierend auf den protokollierten Uplink-Signalqualität- oder Interferenzinformationen bereitgestellt werden, die von dem drahtlosen Gerät empfangen werden, wobei ein geschätzter Wert für die Interferenz über thermisches Rauschen (Interference over Thermal Noise, IoT) durch Subtrahieren eines Schwellenwerts für das Signal-zu-Interferenz- und Rauschverhältnis (Signal to Interference and Noise Ratio, SINR) und einer weißen Rauschleistung von einem nominalen Uplink-Basisleistungspegel eines physikalischen Uplink-Steuerkanals (Physical Uplink Control Channel, PUCCH) des drahtlosen Geräts bestimmt wird, wobei der Uplink-Basisleistungspegel in den MDT-Informationen enthalten ist, und wobei die Betriebsparameter des eNB basierend auf dem IoT-Wert angepasst werden.

2. Computerimplementiertes Verfahren nach Anspruch 1, umfassend:

Konfigurieren des drahtlosen Geräts durch Übertragen einer Konfigurationsnachricht an das drahtlose Gerät, die das drahtlose Gerät anweist, die Uplink-Signalqualität oder die Interferenzeigenschaften für eine oder mehrere Kommunikationsverbindungen zwischen dem drahtlosen Gerät und einer oder mehreren Basisstationen des drahtlosen Netzwerks zu messen, und das drahtlose Gerät anweist, die Uplink-Signalqualität- oder Interferenzinformationen basierend auf der gemessenen Uplink-Signalqualität oder den Interferenzeigenschaften zu protokollieren.

3. Computerimplementiertes Verfahren nach Anspruch 1, wobei die Uplink-Signalqualität- oder Interferenzinformationen eine Angabe über einen oder mehrere Uplink-Basisleistungspegel, die einer von der einen oder den mehreren Basisstationen beobachteten Uplink-Interferenz zugeordnet sind, oder eine Angabe über Funkfelddämpfung für eine oder mehrere Kommunikationsverbindungen zwischen dem drahtlosen Gerät und der einen oder den mehreren Basisstationen enthält.

4. Computerimplementiertes Verfahren nach Anspruch 1, wobei das Analysieren von Uplink-Interferenz oder Funkfelddämpfung das Bestimmen umfasst, ob die Uplink-Interferenz oder Funkfelddämpfung eine Ursache für eine verminderte oder schwache Uplink-Abdeckung für mindestens eine Basisstation der einen oder der mehreren Basisstationen ist.

5. Computerimplementiertes Verfahren nach Anspruch 1, umfassend das Betreiben der Basisstation als einen evolvierten Knoten B (eNB), der gemäß einem oder mehreren oder mehreren 3rd-Generation-Partnership-Project(3GPP)-Long-Term-Evolution(LTE)-Standards einschließlich LTE-Advanced (LTE-A) betrieben werden kann.

6. Computerimplementiertes Verfahren nach Anspruch 1, wobei die MDT-Informationen entweder einen Uplink-Basisleistungspegel für den physikalischen Uplink-Steuerkanal (Physical Uplink Control Channel, PUCCH), welcher der von dem eNB beobachteten Uplink-Interferenz zugeordnet ist, eine geschätzte Funkfelddämpfung oder einen höherschichtigen gefilterten Empfangssignalleistungs(Referenz Signal Received Power, RSRP)-Wert enthalten.

7. Mindestens ein maschinenlesbares Medium, das eine Vielzahl von Anweisungen umfasst, die in Reaktion auf ihre Ausführung durch ein Computergerät das Computergerät veranlassen, ein Verfahren gemäß einem der Ansprüche 1 bis 6 durchzuführen.

8. Vorrichtung, umfassend Mittel zum Durchführen der Verfahren nach einem der Ansprüche 1 bis 6.

**Revendications**

1. Procédé implémenté par ordinateur consistant à :

transmettre, à partir d'une station de base d'un réseau sans fil, une requête d'informations à un dispositif sans fil couplé au réseau sans fil au moyen de la station de base, la requête d'informations étant adaptée pour comprendre une requête pour recevoir des informations consignées de brouillage ou de qualité de signal sur la liaison montante ;

recevoir les informations de brouillage ou de qualité de signal sur la liaison montante en provenance du dispositif sans fil, les informations de brouillage ou de qualité de signal sur la liaison montante comprenant des informations de minimisation de tests de commande (MDT) ; et

analyser, au moyen de la station de base, un brouillage ou une perte de chemin sur la liaison montante associées à une couverture sur la liaison montante assurée par une ou plusieurs stations de base pour le réseau sans fil en se basant, au moins en partie, sur les informations consignées de brouillage ou de qualité de signal sur la liaison montante reçues du dispositif sans fil, dans lequel une valeur estimée de brouillage sur bruit thermique (IoT) est déterminée en soustrayant un seuil de rapport signal sur brouillage plus bruit (SINR) et une puissance de bruit blanc d'un niveau de puissance de base nominale d'un canal de commande de liaison montante physique (PUCCH) du dispositif sans fil, ledit niveau de puissance sur la liaison montante étant inclus dans lesdites informations de minimisation MDT et dans lequel des paramètres de fonctionnement du noeud B évolué (eNB) sont ajustés en se basant sur la valeur IoT.

2. Procédé implémenté par ordinateur selon la revendication 1, consistant à :

configurer le dispositif sans fil par le biais d'une transmission d'un message de configuration au dispositif sans fil qui ordonne au dispositif sans fil de mesurer des caractéristiques de brouillage ou de qualité de signal sur la liaison montante pour une ou plusieurs liaisons de communication entre le dispositif sans fil et une ou plusieurs stations de base du réseau sans fil et ordonne au dispositif sans fil de consigner des informations de brouillage ou de qualité de signal sur la liaison montante en se basant sur les caractéristiques mesurées de brouillage ou de qualité de signal sur la liaison montante.

3. Procédé implémenté par ordinateur selon la revendication 1, les informations de brouillage ou de qualité de signal sur la liaison montante comportant une indication d'un ou de plusieurs niveaux de puissance de base sur la liaison montante associés à un brouillage sur la liaison montante observé par la ou les stations de base ou une indication d'une perte de chemin pour une ou plusieurs liaisons de communication entre le dispositif sans fil et la ou les stations de base.

4. Procédé implémenté par ordinateur selon la revendication 1, l'analyse d'un brouillage ou d'une perte de chemin sur la liaison montante déterminant si un brouillage ou une perte de chemin sur la liaison montante est une cause d'une couverture réduite ou mauvaise sur la liaison montante pour au moins une station de base parmi la ou les stations de base.

5. Procédé implémenté par ordinateur selon la revendication 1, consistant à faire fonctionner la station de base comme un noeud B évolué (eNB) qui peut fonctionner conformément à une ou plusieurs normes de technologie d'évolution à long terme (LTE) de projet de partenariat de 3ème génération (3GPP) pour comprendre une technologie LTE avancée (LTE-A).

6. Procédé implémenté par ordinateur selon la revendication 1, les informations de minimisation MDT étant destinées à comporter un niveau de puissance de base sur la liaison montante pour un canal de commande de liaison montante physique (PUCCH) associé à un brouillage sur la liaison montante observé par le noeud eNB ou une perte de chemin estimée ou une valeur de puissance reçue de signal de référence (RSRP) filtrée par une couche supérieure.

7. Support lisible par au moins une machine comprenant une pluralité d'instructions qui, à la suite de leur exécution sur un dispositif informatique, contraignent le dispositif informatique à mettre en oeuvre un procédé selon l'une quelconque des revendications 1 à 6.

8. Appareil comprenant un moyen pour exécutés les procédés selon l'une quelconque des revendications 1 à 6.

Wireless Network <u>100</u>

Base Station
112

Communication
Link 116

UE 114

Cell 110

*FIG. 1*

## Configuration Message
## Format 200

| Start | Stop | Measurement Directive | Base Station(s) |
|-------|------|----------------------|-----------------|
| 210 | 220 | 230 | 240 |

# FIG. 2

## Information Request Format
## 300

| UE(s) | Base Station(s) | Information Requested |
|-------|-----------------|-----------------------|
| 310   | 320             | 330                   |

## FIG. 3

**Process 400**

```
                                              ┌─────────────────┐
                                              │ Base Station 112│
                                              │        or       │
              ┌──────────────┐                │    Wireless     │
              │   UE 114     │                │  Network 100    │
              └──────────────┘                └─────────────────┘
                     │                                 │
                     │       configuration message     │
                     │◄────────────────────────────────┤
                     │              (4.1)               │
         ┌───────────┴──┐                               │
         │ log uplink   │  (4.2)                        │
         │ signal quality│                              │
         │ or interference│                             │
         │ information  │                               │
         └───────────┬──┘                               │
                     │       information request        │
                     │◄────────────────────────────────┤
                     │              (4.3)               │
                     │                                  │
                     │ logged uplink signal quality or interference information
                     ├─────────────────────────────────►│
                     │              (4.4)               │
                     │                        ┌─────────┴──────┐
                     │                  (4.5) │ analyze uplink │
                     │                        │ interference or│
                     │                        │   pathloss     │
                     │                        └────────────────┘
```

*FIG. 4*

## IE Format 500

```
LogMeasInfo-rxx ::=              SEQUENCE {
        locationInfo-r10                    LocationInfo-r10              OPTIONAL,
        relativeTimeStamp-r10               INTEGER (0..7200),
        servCellIdentity-r10                CellGlobalIdEUTRA,
        measResultServCell-r10              SEQUENCE {
                rsrpResult-r10                      RSRP-Range,
                rsrqResult-r10                      RSRQ-Range,
                p0-NominalPUCCH-rxx                 INTEGER (-127...-96)
        },
        measResultNeighCells-r10            SEQUENCE {
                measureResultListEUTRA-r10          MeasResultList2EUTRA-r9        OPTIONAL,
                measureResultListUTRA-r10           MeasResultList2UTRA-r9         OPTIONAL,
                measureResultListGERAN-r10          MeasResultList2GERAN-r10       OPTIONAL,
                measureResultListCDMA2000-r10       MeasResultList2CDMA2000-r9 OPTIONAL
        }       OPTIONAL,
        ...
}
```

# FIG. 5

## IE Format 600

```
LogMeasInfo-rxx  ::=           SEQUENCE {
        locationInfo-r10                LocationInfo-r10              OPTIONAL,
        relativeTimeStamp-r10           INTEGER (0..7200),
        servCellIdentity-r10            CellGlobalIdEUTRA,
        measResultServCell-r10          SEQUENCE {
            rsrpResult-r10                      RSRP-Range,
            rsrqResult-r10                      RSRQ-Range,
            highLayerFilteredRsrpResult-rxx     RSRP-Range
        },
        measResultNeighCells-r10        SEQUENCE {
            measureResultListEUTRA-r10          MeasResultList2EUTRA-r9      OPTIONAL,
            measureResultListUTRA-r10           MeasResultList2UTRA-r9       OPTIONAL,
            measureResultListGERAN-r10          MeasResultList2GERAN-r10     OPTIONAL,
            measureResultListCDMA2000-r10       MeasResultList2CDMA2000-r9   OPTIONAL
        } OPTIONAL,
        ...
}
```

## FIG. 6

## IE Format 700

```
LogMeasInfo-rxx  ::=              SEQUENCE {
        locationInfo-r10                 LocationInfo-r10              OPTIONAL,
        relativeTimeStamp-r10            INTEGER  (0..7200),
        servCellIdentity-r10             CellGlobalIdEUTRA,
        measResultServCell-r10           SEQUENCE {
            rsrpResult-r10                       RSRP-Range,
            rsrqResult-r10                       RSRQ-Range,
            pathlossEstimated-rxx                INTEGER (0...255)
        },
        measResultNeighCells-r10         SEQUENCE {
            measureResultListEUTRA-r10           MeasResultList2EUTRA-r9      OPTIONAL,
            measureResultListUTRA-r10            MeasResultList2UTRA-r9       OPTIONAL,
            measureResultListGERAN-r10           MeasResultList2GERAN-r10     OPTIONAL,
            measureResultListCDMA2000-r10        MeasResultList2CDMA2000-r9   OPTIONAL
        } OPTIONAL,
        ...
}
```

## FIG. 7

# *Apparatus 800*

Configuration
Message
805

Information
Request
810

## *Processor Circuit 820*

Config.
Component
822-1

Request
Component
822-2

Receive
Component
822-3

Analysis Component
822-4

Interference
Indication(s)
824-a

Pathloss
Indication(s)
826-b

Uplink Signal Quality
or Interference Information
830-c

# *FIG. 8*

## *900*

CONFIGURE WIRELESS DEVICE VIA TRANSMISSION OF A CONFIGURATION MESSAGE TO DIRECT WIRELESS DEVICE TO MEASURE UPLINK SIGNAL QUALITY OR INTERFERENCE CHARACTERISTICS OF COMMUNICATION LINK BETWEEN WIRELESS DEVICE AND A BASE STATION OF A WIRELESS NETWORK AND ALSO DIRECTS THE WIRELESS DEVICE TO LOG SIGNAL QUALITY OR INTERFERENCE INFORMATION BASED ON MEASURED UPLINK SIGNAL QUALITY OR INTERFERENCE CHARACTERISTICS
*902*

TRANSMIT INFORMATION REQUEST TO WIRELESS DEVICE THAT INCLUDES A REQUEST TO RECEIVE LOGGED UPLINK SIGNAL QUALITY OR INTERFERENCE INFORMATION
*904*

RECEIVE UPLINK SIGNAL QUALITY OR INTERFERENCE INFORMATION FROM WIRELESS DEVICE
*906*

ANALYZE UPLINK INTERFERENCE OR PATHLOSS ASSOCIATED WITH UPLINK COVERAGE PROVIDED BY THE BASE STATION
*908*

BASE ANALYSIS, AT LEAST IN PART, ON LOGGED UPLINK SIGNAL QUALITY OR INTERFERENCE INFORMATION
*910*

DETERMINE WHETHER UPLINK INTERFERENCE OR PATHLOSS MAY CAUSE REDUCED OR WEAK UPLINK COVERAGE FOR THE BASE STATION
*912*

### *FIG. 9*

## *1000*

```
START
```

operate base station in compliance with one or more
3GPP LTE standards to include LTE-A
*1002*

operate base station as an eNB
*1004*

receive uplink signal quality or interference
information as MDT information
*1006*

obtain, from the MDT information, uplink base power
level for PUCCH associated with uplink interference
observed by the eNB
*1008*

Obtain, from the MDT, an estimated pathloss or a
higher layer filtered RSRP value
*1010*

```
END
```

## FIG. 10

**_Storage Medium 1100_**

Computer Executable
Instructions for 900

Computer Executable
Instructions for 1000

*FIG. 11*

## _**Apparatus 1200**_

Configuration
Message
1205

Information
Request
1212

### _**Processor Circuit 1220**_

Receive
Component
1222-1

Config.
Component
1222-2

Send Component
1222-3

Uplink Interference
Information
1224-a

Pathloss
Information
1226-b

Memory
1240

Uplink Signal or Interference
Quality Information
1230-c

## _FIG. 12_

## 1300

RECEIVE CONFIGURATION MESSAGE
1302

CONFIGURE WIRELESS DEVICE BASED ON THE
CONFIGURATION MESSAGE
1304

CONFIGURE TO MEASURE UPLINK SIGNAL QUALITY
OR INTERFERENCE CHARACTERISTICS FOR
COMMUNICATION LINK BETWEEN WIRELESS DEVICE
AND BASE STATION OF A WIRELESS NETWORK
1306

CONFIGURE TO LOG UPLINK SIGNAL QUALITY
INFORMATION ASSOCIATED WITH MEASURED UPLINK
SIGNAL QUALITY OR INTERFERENCE
CHARACTERISTICS
1308

SEND LOGGED UPLINK SIGNAL QUALITY OR INTERFERENCE
INFORMATION TO A BASE STATION OF THE WIRELESS
NETWORK RESPONSIVE TO RECEIVING INFORMATION
REQUEST FROM THE BASE STATION
1310

## FIG. 13

## *1400*

START

operate wireless device in compliance with one or more 3GPP LTE standards to include LTE-A
*1402*

log uplink signal quality or interference information as MDT information
*1404*

include, in the MDT information, uplink base power level for PUCCH associated with uplink interference observed by the base station
*1406*

include, in the MDT information, an estimated pathloss or a high layer filtered RSRP value
*1408*

END

## *FIG. 14*

*__Storage Medium 1500__*

*Computer Executable
Instructions for 1300*

*Computer Executable
Instructions for 1400*

*FIG. 15*

# Device 1600

**FIG. 16**

**_Broadband Wireless Access System 1700_**

**_FIG. 17_**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20110050311